# EUROPEAN PATENT APPLICATION

(11) **EP 4 672 701 A1**
(43) Date of publication of application: **31.12.2025**
(21) Application number: 23923755.5
(22) Date of filing: 10.11.2023
(51) Int. Cl.: H04L 45/00

(54) **SRV6 POLICY CONFIGURATION DATA PROCESSING METHOD AND APPARATUS, DEVICE AND MEDIUM**

(30) Priority: 24.02.2023 CN 202310196552
(71) Applicant: ZTE CORPORATION, Shenzhen, Guangdong 518057 (CN)
(72) Inventor: YAN, Min, Shenzhen, Guangdong 518057 (CN)
(74) Representative: Ziebig Hengelhaupt Intellectual Property Attorneys Patentanwaltskanzlei PartGmbB
(86) International application number: PCT/CN2023/131010
(87) International publication number: WO 2024/174591

(57) **Abstract**

The present application provides an SRv6 Policy configuration data processing method and apparatus, an electronic device and a medium. In a solution, an SRv6 gateway node receives target SRv6 Policy configuration data; first determines whether the target SRv6 Policy configuration data is associated with locally stored existing SRv6 Policy configuration data; and if so, stores the target SRv6 Policy configuration data and performs diversion processing on a SRv6 service message according to the target SRv6 Policy configuration data, or if not, directly ignores the target SRv6 Policy configuration data.

## Description

### CROSS-REFERENCE TO RELATED APPLICATIONS

The present application claims priority to the Chinese Patent Application No. 202310196552.3, filed to the China Patent Office on February 24, 2023 and entitled "SRV6 POLICY CONFIGURATION DATA PROCESSING METHOD AND APPARATUS, DEVICE AND MEDIUM", the entire contents of which are incorporated herein by reference.

### TECHNICAL FIELD

The present application relates to the technical field of communications, in particular to a method and apparatus for processing SRv6 Policy configuration data, an electronic device and a medium.

### BACKGROUND

Segment Routing IPv6 (SRv6) is a protocol designed based on a concept of source routing and used for forwarding an IPv6 data packet on a network.

An SRv6 network mainly adopts SRv6 Policy traffic steering technology. SRv6 Policy may perform path planning between any nodes of the network, which can not only meet a demand of differentiation of a user network in various aspects such as time delay, bandwidth, jittering and reliability, but also improve a network bandwidth utilization rate through precise control of time delay and bandwidth and save investments.

In a current slicing packet network (SPN) end-to-end SRv6 scenario, an issuing manner of an SRv6 Policy configuration is to forward to all neighbors, which enables an SRv6 gateway node to receive SRv6 Policy configuration data that is not intended for the local node and store locally the configuration data, and finally, processing performance is reduced due to storage of too many data irrelevant to the local.

### SUMMARY

An objective of embodiments of the present application is to provide a method and apparatus for processing SRv6 Policy configuration data, an electronic device and a medium, which enable an SRv6 gateway node to store only SRv6 Policy configuration data relevant to the local.

For implementing the above objective, the embodiments of the present application are implemented as follows.

In a first aspect, a method for processing SRv6 Policy configuration data is provided, applied to an SRv6 gateway node, including: receiving target SRv6 Policy configuration data; determining whether the target SRv6 Policy configuration data is associated with locally stored existing SRv6 Policy configuration data; and storing the target SRv6 Policy configuration data in a case of determining that the target SRv6 Policy configuration data is associated with the locally stored existing SRv6 Policy configuration data, and performing traffic steering processing on an SRv6 service message according to the stored target SRv6 Policy configuration data.

In a second aspect, an apparatus for processing SRv6 Policy configuration data is provided, including: a data receiver, configured to receive target SRv6 Policy configuration data; a processor, configured to determine whether the target SRv6 Policy configuration data is associated with existing SRv6 Policy configuration data; and a memory, configured to store the target SRv6 Policy configuration data in a case that the target SRv6 Policy configuration data is associated with the existing SRv6 Policy configuration data, wherein the target SRv6 Policy configuration data is used to perform traffic steering processing on an SRv6 service message.

In a third aspect, an electronic device is provided, including: a processor; and a memory, configured to store computer executable instructions, wherein the computer executable instructions, when executed, cause the processor to perform the method described in the first aspect.

In a fourth aspect, a computer-readable storage medium is provided, configured to store computer executable instructions, wherein the computer executable instructions, when executed by a processor, implement the method described in the first aspect.

### BRIEF DESCRIPTION OF DRAWING(S)

For more clearly describing the technical solutions in the embodiments of the present application or in the prior art, accompanying drawings needed in the descriptions of the embodiments or the prior art are briefly introduced below. Apparently, the accompanying drawings in the following descriptions are only some embodiments recorded in the embodiments of the present application. Those ordinarily skilled in the art can also obtain other accompanying drawings according to these accompanying drawings without making creative efforts.
Fig. 1 is a schematic flowchart of a method for processing SRv6 Policy configuration data in an embodiment of the present application.
Fig. 2 is a schematic diagram of an application scenario of a method for processing SRv6 Policy configuration data in an embodiment of the present application.
Fig. 3 is a schematic structural diagram of an apparatus for processing SRv6 Policy configuration data in an embodiment of the present application.
Fig. 4 is a schematic structural diagram of an electronic device in an embodiment of the present application.

### DETAILED DESCRIPTION

For making those skilled in the art better understand the technical solutions in the specification, the technical solutions in the embodiments of the present application are described clearly and completely below with reference to the accompanying drawings in the embodiments of the present application. Apparently, the described embodiments are only some embodiments rather than all of the embodiments in the specification. All other embodiments obtained by those ordinarily skilled in the art based on the embodiments in the specification without making creative efforts fall within the scope of protection of the specification.

As described above, in a current slicing packet network (SPN) end-to-end SRv6 scenario, an issuing manner of an SRv6 Policy configuration is to forward to all neighbors, which enables an SRv6 gateway node to receive SRv6 Policy configuration data that is not intended for the local node and store locally the configuration data, and finally, processing performance is reduced due to storage of too many data irrelevant to the local.

In view of this, embodiments of the present application are intended to provide a technical solution for making the SRv6 gateway node store no non-local SRv6 Policy configuration.

Specifically, in the embodiments of the present application, a software defined network (SDN) controller is responsible for controlling information such as network-wide topology, real-time traffic, and SRv6 SID, which includes generation of the SRv6 Policy configuration data. In other words, the SRv6 controller is responsible for transforming a service demand to an SRv6 Policy configuration and issuing the SRv6 Policy configuration to a forwarder through a southbound protocol.

There are an active mode and a passive mode for issuing the SRv6 Policy configuration.

The active mode means that the SDN controller generates the SRv6 Policy configuration regularly based on a time limit policy of a local SRv6 Policy configuration. The time limit policy may be set flexibly according to specific demands, which is not specifically limited herein.

The passive mode means that the SDN controller, after receiving an SRv6 service message returned by the SRv6 gateway node, generates responsive SRv6 Policy configuration data. In a general case, the SRv6 gateway node, after receiving the SRv6 service message, returns the SRv6 service message to the SDN controller in a case that the SRv6 gateway node does not store SRv6 Policy configuration data for performing traffic steering processing on the SRv6 service message.

In addition, in the present application, the SDN controller still uses an extended function of an existing border gateway protocol (BGP) for segment routing to issue the SRv6 Policy configuration to all neighbors. In other words, the SRv6 gateway node may receive SRv6 Policy configuration data issued by the SDN controller and its neighbor nodes, which includes SRv6 Policy configuration data irrelevant thereto. However, the SRv6 gateway node in the present application may analyze whether the received SRv6 Policy configuration data is associated with the local according to information therein.

The SRv6 Policy configuration data mainly includes the following elements:
1) Key value: a SRv6 Policy is uniquely identified globally using the following triplet:
   Headend: identifying a headend of the SRv6 Policy. Headend may steer traffic into one SRv6 Policy.
   Color: identifying different SRv6 Policy of a specified headend and endpoint, this may be associated with a series of service attributes, such as low delay, and high bandwidth, and may be understood as a service demand template ID. There is no unified specified coding rule at present, and its value is allocated by an administrator. For example, a policy with an end-to-end delay less than 10 ms may be configured with a Color value 100. Color provides an association mechanism for services and SRv6 Policies.
   Endpoint: identifying a destination address of the SRv6 Policy.
2) Candidate Path: one SRv6 Policy may be associated with a plurality of candidate paths, and each candidate path has a preference attached. When there is a plurality of candidate paths, the SRv6 Policy selects a candidate path with the highest preference as a primary path. The candidate path is a basic unit for sending an SR Policy optional path to the headend through a protocol such as a BGP SR Policy, and different protocols may issue different candidate paths.
   The SRv6 Policy may support various path computation manners: centralized path computation by a path computation element (PCE), path computation by the headend, manual path planning, and path computation through a flexible algorithm (Flex-Algo), a design of multiple candidate paths may shield these details from a service, the service does not need to care about a specific path computation manner but only needs to focus on the service demand per se, and paths formed by these different path computation manners are encapsulated inside the SRv6 Policy through a plurality of candidate paths. For a conventional TE Tunnel, different path computation manners are carried by different TE Tunnels, and the service can match a responsive tunnel only when seeing different TE Tunnels and knowing implementation details of these TE Tunnels. At the same time, the candidate paths are also used to support primary and standby redundant paths and an escape path, the SRv6 Policy also encapsulates these protection paths and escape path inside the SRv6 Policy, and the service does not need to see these details.
3) Segment list: a segment list identifies a source routing path for sending traffic to the endpoint through the SRv6 Policy. One candidate path may be associated with a plurality of segment lists, a load ratio of the traffic in a plurality of SR paths is controlled through a weight attribute attached to the segment list, and thus unequal-cost multiple path (UCMP) is implemented.
   The design of the plurality of segment lists may improve network resilience, meet a demand of real-time change of a service and implement dynamic elastic expansion of network resources. For example, if a type of service needs to increase a bandwidth from 2G to 5G, the SRv6 Policy may recalculate a path of a 3G bandwidth. At the same time, the UCMP may also more conveniently implement optimization of the network resources, and if overload occurs to traffic of a certain segment list path, a weight of the segment list may be adjusted to reduce the load of the path.
4) Binding segment routing identification (Binding SID): Binding SID is also a basic instruction of Segment Routing and used to identify a whole candidate path, and provide functions such as tunnel connection and traffic steering. A message, if carrying a BSID corresponding to the candidate path, may be guided to the corresponding candidate path. The Binding SID may be understood as an interface through which services invoke network functions and select a candidate path.

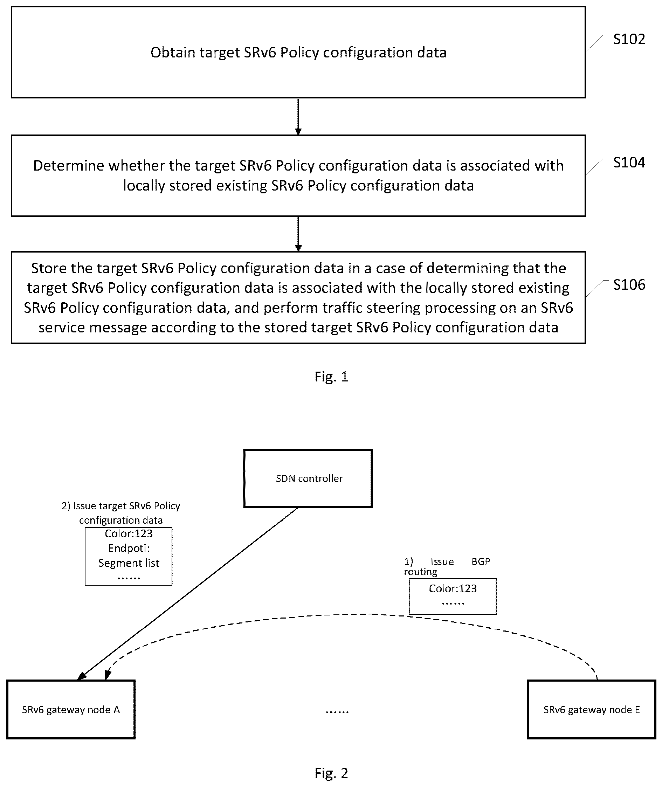

Based on a structure of the above SRv6 Policy, an embodiment of the present application provides a method for processing SRv6 Policy configuration data. The processing method may be performed by an SRv6 gateway node. Fig. 1 is a schematic flowchart of a processing method in an embodiment of the present application, specifically including the following steps.

S102: target SRv6 Policy configuration data is obtained.

As described above, in the embodiment of the present application, the target SRv6 Policy configuration data is issued by an SDN controller or a neighbor node corresponding to the SRv6 gateway node, which is not repeated here.

S104: whether the target SRv6 Policy configuration data is associated with locally stored existing SRv6 Policy configuration data is determined.

As an exemplary introduction, the embodiment of the present application may determine whether the target SRv6 Policy configuration data is associated with the locally stored existing SRv6 Policy configuration data through the following two manners.

First manner: whether the target SRv6 Policy configuration data is associated with the locally stored existing SRv6 Policy configuration data is determined by analyzing routing information of the target SRv6 Policy configuration data and the existing SRv6 Policy configuration data.

Specifically, the routing information indicated by the target SRv6 Policy configuration data and the existing SRv6 Policy configuration data may be queried based on Binding SIDs in the target SRv6 Policy configuration data and the existing SRv6 Policy configuration data. It may be determined that the target SRv6 Policy configuration data is associated with the existing SRv6 Policy configuration data in a case that the routing information indicated by the target SRv6 Policy configuration data intersects with the routing information indicated by the existing SRv6 Policy configuration data.

Second manner: whether the target SRv6 Policy configuration data is associated with the locally stored existing SRv6 Policy configuration data is determined by analyzing a Key value of the target SRv6 Policy configuration data is valid in the existing SRv6 Policy configuration data.

Specifically, a headend and/or endpoint corresponding to the target SRv6 Policy configuration data may be determined according to the Key value of the target SRv6 Policy configuration data.

Then, whether the headend and/or endpoint corresponding to the target SRv6 Policy configuration data is a hopping node indicated by the existing SRv6 Policy configuration data is judged. For example, whether the headend and/or endpoint corresponding to the target SRv6 Policy configuration data appears in a path indicated by the existing SRv6 Policy configuration data is queried.

In a case that the hopping node is determined, it indicates that the Key value of the target SRv6 Policy configuration data is valid in the existing SRv6 Policy configuration data, and then it is further determined that the target SRv6 Policy configuration data is associated with the existing SRv6 Policy configuration data.

S106: the target SRv6 Policy configuration data is stored in a case of determining that the target SRv6 Policy configuration data is associated with the locally stored existing SRv6 Policy configuration data, and traffic steering processing is performed on an SRv6 service message according to the stored target SRv6 Policy configuration data.

It may be known based on the above contents that in the method of the embodiment of the present application, the SRv6 gateway node, after receiving the target SRv6 Policy configuration data broadcast and issued by the SRv6 controller, determines whether the target SRv6 Policy configuration data is associated with the locally stored existing SRv6 Policy configuration data first; if so, then stores the target SRv6 Policy configuration data and performs traffic steering processing on the SRv6 service message according to the stored target SRv6 Policy configuration; or if not, directly ignores the target SRv6 Policy configuration data. In other words, in an end-to-end SRv6 scenario of the SPN, the SRv6 gateway node does not locally store the received invalid SRv6 Policy configuration data, so as to avoid occurrence of the problem that the processing performance is reduced due to occupation by too many stored resources.

The method of the embodiment of the present application is introduced below with reference to an application scenario.

Traffic steering is performed on an SRv6 service in the application scenario through Color of the SRv6 Policy. Color may be carried as an extended community attribute of BGP routing, and thus when the service is steered to the SRv6 Policy, the control granularity can be precise to the level of individual routes.

Based on the aforementioned descriptions, Color is a very important attribute of the SRv6 Policy and is an anchor point of a service and a tunnel. Color may be associated with one or more service demand templates, such as low delay, bandwidth, and affinity attribute. The SRv6 Policy performs path computation according to the Color. In another aspect, the service also uses Color to define a demand of network connection. In this way, by matching the service with Color of the SRv6 Policy, automatic traffic steering can be implemented. Thus, during service deployment, it does not depend on concern of the definition of the tunnel, and only needs to define the demand of the service, so decoupling of the service deployment and tunnel deployment is implemented.

As shown in Fig. 2, it is assumed that a plurality of SRv6 gateway nodes are deployed on an SPN in this application scenario, and an SRv6 gateway node A and an SRv6 gateway node E in Fig. 2 are taken as an example here.

First, 1) the SRv6 gateway node E sets a Color extended community attribute value of routing to 123 through a routing policy, and carries the Color attribute when issuing the routing, this Color extended community attribute is Binding SID information, and the information is notified to the SRv6 gateway node A by the SRv6 gateway node E through BGP routing.

Then, 2) an SRv6 controller formally issues target SRv6 Policy configuration data to the SRv6 gateway node A through the BGP, and a Color attribute of the target SRv6 Policy configuration data is 123.

Correspondingly, the SRv6 gateway node A, after receiving the target SRv6 Policy configuration data, queries the Binding SID information, a Key value and the like in the target SRv6 Policy configuration data to judge whether the target SRv6 Policy configuration data is associated with locally existing SRv6 Policy configuration data (judgment logic is as described above); if so, locally stores the target SRv6 Policy configuration data; or if not, does not perform storing.

It is assumed that in this application scenario, the SRv6 gateway node A selects to store the target SRv6 Policy configuration data for configuration. Through the above method, when traffic reaches the SRv6 gateway node A, the SRv6 gateway node A queries the routing according to a traffic destination address to obtain a tunnel egress interface as the SRv6 Policy, and then encapsulates and forwards an SRv6 message according to a routing policy of the target SRv6 Policy configuration data, thereby implementing the scenario of automatic traffic steering to the SRv6 Policy according to the Color attribute.

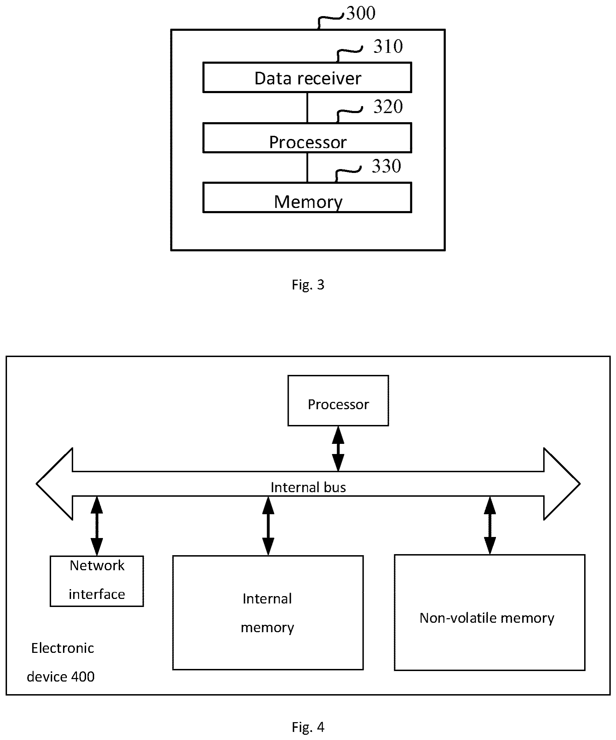

In another aspect, an embodiment of the present application further provides an apparatus for processing SRv6 Policy configuration data. Fig. 3 is a schematic structural diagram of a processing apparatus 300, including:
a data receiver 310, configured to receive target SRv6 Policy configuration data;
a processor 320, configured to determine whether the target SRv6 Policy configuration data is associated with existing SRv6 Policy configuration data; and
a memory 330, configured to store the target SRv6 Policy configuration data in a case that the target SRv6 Policy configuration data is associated with the existing SRv6 Policy configuration data, wherein the target SRv6 Policy configuration data is used to perform traffic steering processing on an SRv6 service message.

Based on the apparatus of the embodiment of the present application, an SRv6 gateway node, after receiving the target SRv6 Policy configuration data broadcast and issued by an SRv6 controller, determines whether the target SRv6 Policy configuration data is associated with the locally stored existing SRv6 Policy configuration data first; if so, then stores the target SRv6 Policy configuration data and performs traffic steering processing on the SRv6 service message according to the stored target SRv6 Policy configuration; or if not, directly ignores the target SRv6 Policy configuration data. In other words, in an end-to-end SRv6 scenario of an SPN, the SRv6 gateway node does not locally store received invalid SRv6 Policy configuration data, so as to avoid occurrence of the problem that the processing performance is reduced due to occupation by too many stored resources.

Optionally, determining, by the processor 320, whether the target SRv6 Policy configuration data is associated with the locally stored existing SRv6 Policy configuration data includes: determining whether routing information indicated by the target SRv6 Policy configuration data intersects with routing information indicated by the existing SRv6 Policy configuration data; and determining that the target SRv6 Policy configuration data is associated with the existing SRv6 Policy configuration data in a case of determining that the routing information indicated by the target SRv6 Policy configuration data intersects with the routing information indicated by the existing SRv6 Policy configuration data.

Optionally, before determining whether the routing information indicated by the target SRv6 Policy configuration data intersects with the routing information indicated by the existing SRv6 Policy configuration data, the processor 320 further performs: obtaining, by query, the routing information indicated by the target SRv6 Policy configuration data based on a binding segment routing identification in the target SRv6 Policy configuration data, and obtaining, by query, the routing information indicated by the existing SRv6 Policy configuration data based on a binding segment routing identification in the existing SRv6 Policy configuration data.

Optionally, determining, by the processor 320, whether the target SRv6 Policy configuration data is associated with the locally stored existing SRv6 Policy configuration data further includes: determining whether key value information of the target SRv6 Policy configuration data is valid in the existing SRv6 Policy configuration data; and determining that the target SRv6 Policy configuration data is associated with the existing SRv6 Policy configuration data in a case of determining that the key value information of the target SRv6 Policy configuration data is valid in the existing SRv6 Policy configuration data.

Optionally, determining, by the processor 320, whether the key value information of the target SRv6 Policy configuration data is valid in the existing SRv6 Policy configuration data includes: determining whether a headend and/or endpoint in the key value information of the target SRv6 Policy configuration data belongs to a hopping node indicated by the existing SRv6 Policy configuration data; and determining that the key value information of the target SRv6 Policy configuration data is valid in the existing SRv6 Policy configuration data after determining that the headend and/or endpoint in the key value information of the target SRv6 Policy configuration data belongs to the hopping node indicated by the existing SRv6 Policy configuration data.

Optionally, the target SRv6 Policy configuration data is issued by a software defined network (SDN) controller or a neighbor node corresponding to the SRv6 gateway node.

In a case that the target SRv6 Policy configuration data is issued by the SDN controller, the target SRv6 Policy configuration data is generated regularly by the SDN controller based on a time limit policy of a local SRv6 Policy configuration, or the target SRv6 Policy configuration data is generated by the SDN controller after an SRv6 service message returned by the SRv6 gateway node is received, wherein the SRv6 service message returned by the SRv6 gateway node is: the SRv6 service message returned to the SDN controller in a case that the SRv6 gateway node, after receiving the SRv6 service message, determines that the SRv6 gateway node does not store SRv6 Policy configuration data for performing traffic steering processing on the SRv6 service message.

Apparently, the processing apparatus shown in Fig. 3 may be used as an executing body for the method shown in Fig. 1, so as to implement the steps and the corresponding functions of the method shown in Fig. 1. The principle is the same and is not repeated in detail here.

Fig. 4 is a schematic structural diagram of an electronic device 400 in an embodiment of the specification. Please refer to Fig. 4, on a hardware level, the electronic device 400 includes a processor, and optionally, further includes an internal bus, a network interface and a memory. The memory may include an internal memory, such as a high-speed random-access memory (RAM), or may also include a non-volatile memory, such as at least one disk memory, etc. Certainly, the electronic device 400 may also include hardware needed by other services.

The processor, the network interface and the memory may be interconnected through the internal bus. The internal bus may be an industry standard architecture (ISA) bus, a peripheral component interconnect (PCI) bus, an extended industry standard architecture (EISA) bus, etc. The bus may be divided into an address bus, a data bus, a control bus, etc. For convenient description, only a bidirectional arrow is illustrated in Fig. 4, but it does not mean that there is only one bus or a type of bus.

The memory is configured to store a program. Specifically, the program may include a program code, and the program code includes computer operating instructions. The memory may include the internal memory and the non-volatile memory and provide instructions and data for the processor.

Optionally, the processor reads from the non-volatile memory a corresponding computer program to the internal memory to run the computer program, and the processing apparatus shown in Fig. 3 is formed on a logical level. Correspondingly, the processor executes the program stored in the memory and is specifically configured to perform the following operations:
receiving target SRv6 Policy configuration data;
determining whether the target SRv6 Policy configuration data is associated with locally stored existing SRv6 Policy configuration data; and
storing the target SRv6 Policy configuration data in a case of determining that the target SRv6 Policy configuration data is associated with the locally stored existing SRv6 Policy configuration data, and performing traffic steering processing on an SRv6 service message according to the stored target SRv6 Policy configuration data.

Based on the electronic device 400 of the embodiment of the present application, an SRv6 gateway node, after receiving the target SRv6 Policy configuration data broadcast and issued by an SRv6 controller, determines whether the target SRv6 Policy configuration data is associated with the locally stored existing SRv6 Policy configuration data first; if so, then stores the target SRv6 Policy configuration and performs traffic steering processing on the SRv6 service message according to the stored target SRv6 Policy configuration; or if not, directly ignores the target SRv6 Policy configuration data. In other words, in an end-to-end SRv6 scenario of an SPN, the SRv6 gateway node does not locally store received invalid SRv6 Policy configuration data, so as to avoid occurrence of the problem that the processing performance is reduced due to occupation by too many stored resources.

The method for processing the SRv6 Policy configuration data disclosed in the above embodiment of the specification may be applied to the processor and implemented by the processor. The processor may be an integrated circuit chip and has a signal processing capability. During an implementation process, all the steps in the above method may be completed through an integrated logic circuit of hardware in the processor or instructions in a software form. The above processor may be a general-purpose processor, including a central processing unit (CPU), a network processor (NP), etc.; or may also be a digital signal processor (DSP), an application specific integrated circuit (ASIC), a field-programmable gate array (FPGA) or another programmable logic device, a discrete gate or a transistor logic device, or a discrete hardware component. The respective methods, steps and logic block diagrams disclosed in the embodiments of the present application may be implemented or performed. The general-purpose processor may be a micro-processor or the processor may also be any conventional processor. The steps of the method disclosed in combination with the embodiment of the present application may be directly embodied as being performed by a hardware decoding processor, or being performed by a hardware and software module combination in the decoding processor. A software module may be located in a storage medium mature in the art, such as a random memory, a flash memory, a read-only memory, a programmable read-only memory or an electrically erasable programmable memory, or a register. The storage medium is located in the memory. The processor reads information in the memory and completes the steps of the above method in combination with its hardware.

Certainly, in addition to a software implementation manner, the electronic device in the specification does not exclude other implementation manners, such as a logic device or a software and hardware combination manner, in other words, executing bodies of the following processing flows are not limited to the respective logic units and may also be hardware or logic devices.

In addition, an embodiment of the present application further provides a computer-readable storage medium. The computer-readable storage medium stores one or more programs. The one or more programs include instructions.

Optionally, the above instructions, when executed by a portable electronic device including a plurality of application programs, enable the portable electronic device to perform the steps of the method shown in Fig. 1, including:
receiving target SRv6 Policy configuration data;
determining whether the target SRv6 Policy configuration data is associated with locally stored existing SRv6 Policy configuration data; and
storing the target SRv6 Policy configuration data in a case of determining that the target SRv6 Policy configuration data is associated with the locally stored existing SRv6 Policy configuration data, and performing traffic steering processing on an SRv6 service message according to the stored target SRv6 Policy configuration data.

Those skilled in the art should understand that the embodiments of the specification may be provided as a method, system or computer program product. Thus, the specification may adopt a form of complete hardware embodiment, complete software embodiment or an embodiment combining software and hardware. Besides, the specification may adopt a form of a computer program product implemented on one or more computer applicable storage media (including but not limited to a disk memory, a CD-ROM, an optical memory, etc.) including computer applicable program codes.

The specific embodiments of the specification are described above. The other embodiments fall within the scope of the appended claims. In some cases, actions or steps recorded in the claims may be performed in a sequence different from that in the embodiment, which may still achieve expected results. In addition, a specific sequence or consecutive order shown is not necessary in a process described in the accompanying drawings for achieving expected results. In some implementations, multi-task processing and parallel processing may also be permitted or may be favorable.

The above is only embodiments of the specification and is not intended to limit the specification. Those skilled in the art may make various changes and variations to the specification. Any modification, equivalent replacement, improvement and the like made within the spirit and principle of the specification should be included in the scope of the claims of the specification. In addition, all other embodiments obtained by those ordinarily skilled in the art without making creative efforts fall within the scope of protection of the document.

## Claims

1. A method for processing segment routing policy based on an IPv6 forwarding plane (SRv6 Policy) configuration data, applied to an SRv6 gateway node, comprising:
receiving target SRv6 Policy configuration data; and
storing the target SRv6 Policy configuration data in a case of determining that the target SRv6 Policy configuration data is associated with locally stored existing SRv6 Policy configuration data, and performing traffic steering processing on an SRv6 service message according to the stored target SRv6 Policy configuration data.

2. The method according to claim 1, wherein
determining that the target SRv6 Policy configuration data is associated with the locally stored existing SRv6 Policy configuration data comprises:
determining that the target SRv6 Policy configuration data is associated with the existing SRv6 Policy configuration data in a case of determining that routing information indicated by the target SRv6 Policy configuration data intersects with routing information indicated by the existing SRv6 Policy configuration data.

3. The method according to claim 2, wherein
before determining that the routing information indicated by the target SRv6 Policy configuration data intersects with the routing information indicated by the existing SRv6 Policy configuration data, the method further comprises:
obtaining, by query, the routing information indicated by the target SRv6 Policy configuration data based on a binding segment routing identification in the target SRv6 Policy configuration data, and obtaining, by query, the routing information indicated by the existing SRv6 Policy configuration data based on a binding segment routing identification in the existing SRv6 Policy configuration data.

4. The method according to claim 1, wherein
determining that the target SRv6 Policy configuration data is associated with the locally stored existing SRv6 Policy configuration data further comprises:
determining that the target SRv6 Policy configuration data is associated with the existing SRv6 Policy configuration data in a case of determining that key value information of the target SRv6 Policy configuration data is valid in the existing SRv6 Policy configuration data.

5. The method according to claim 4, wherein
determining that the key value information of the target SRv6 Policy configuration data is valid in the existing SRv6 Policy configuration data comprises:
determining that the key value information of the target SRv6 Policy configuration data is valid in the existing SRv6 Policy configuration data in a case of determining that a headend and/or endpoint in the key value information of the target SRv6 Policy configuration data belongs to a hopping node indicated by the existing SRv6 Policy configuration data.

6. The method according to any one of claims 1 to 5, wherein
the target SRv6 Policy configuration data is issued by a software defined network (SDN) controller or a neighbor node corresponding to the SRv6 gateway node.

7. The method according to claim 6, wherein
in a case that the target SRv6 Policy configuration data is issued by the SDN controller,
the target SRv6 Policy configuration data is generated regularly by the SDN controller based on a time limit policy of a local SRv6 Policy configuration, or the target SRv6 Policy configuration data is generated by the SDN controller after the SRv6 service message returned by the SRv6 gateway node is received, wherein the SRv6 service message returned by the SRv6 gateway node is: the SRv6 service message returned to the SDN controller in a case that the SRv6 gateway node, after receiving the SRv6 service message, determines that the SRv6 gateway node does not store SRv6 Policy configuration data for performing traffic steering processing on the SRv6 service message.

8. An apparatus for processing SRv6 Policy configuration data, comprising:
a data receiver, configured to receive target SRv6 Policy configuration data;
a processor, configured to determine whether the target SRv6 Policy configuration data is associated with existing SRv6 Policy configuration data; and
a memory, configured to store the target SRv6 Policy configuration data in a case that the target SRv6 Policy configuration data is associated with the existing SRv6 Policy configuration data, wherein the target SRv6 Policy configuration data is used to perform traffic steering processing on an SRv6 service message.

9. An electronic device, comprising: a processor; and a memory, configured to store computer executable instructions, wherein the computer executable instructions, when executed, cause the processor to perform the method according to any one of claims 1 to 7.

10. A computer-readable storage medium, configured to store computer executable instructions, wherein the computer executable instructions, when executed by a processor, implement the method according to any one of claims 1 to 7.
